# EUROPÄISCHE PATENTSCHRIFT

(11) **EP 1 302 689 B1**
(45) Veröffentlichungstag und Bekanntmachung des Hinweises auf die Patenterteilung: **26.01.2005**
(21) Anmeldenummer: 02015495.1
(22) Anmeldetag: 12.07.2002
(51) Int. Cl.: F16D 41/06

(54) **Verschlusssystem für ein Freilaufgetriebe, insbesondere mit ortsfestem Freilauf, und entsprechendes Freilaufgetriebe**
Locking system for one-way clutch, particularly with fixed freewheel, and corresponding one-way clutch
Système de fermeture pour un embrayage à roue libre, particulièrement avec roue libre fixe, et embrayage à roue libre correspondant

(30) Priorität: 16.10.2001 DE 10152650
(43) Veröffentlichungstag der Anmeldung: 16.04.2003
(73) Patentinhaber: ROBERT BOSCH GMBH, 70442 Stuttgart (DE)
(72) Erfinder: Fonck, Andreas, 31139 Hildesheim (DE); Ruhbach, Lars, Dr., 31199 Diekholzen (DE); Becker, Ralf, 30173 Hannover (DE); Fuhr, Steffen, 71088 Holzgerlingen (DE)

(56) Entgegenhaltungen:
- DE-A- 10 007 620
- GB-A- 2 086 495
- US-A- 6 138 803
- US-B1- 6 231 475
- PATENT ABSTRACTS OF JAPAN vol. 009, no. 092 (M-373), 20. April 1985 (1985-04-20) & JP 59 217019 A (NIPPON DENSO KK), 7. Dezember 1984 (1984-12-07)

## Beschreibung

Die Erfindung betrifft ein Verschlusssystem für ein Freilaufgetriebe, insbesondere mit ortsfestem Freilauf, gemäss dem Oberbegriff des Anspruchs 1.

### Stand der Technik

Verschlusssysteme der eingangs genannten Art sind bereits bekannt. Sie enthalten zumeist eine Verschlusskappe insbesondere aus Metall, die zur axialen Fixierung einer Haltescheibe sowie einer Führungsscheibe desselben Verschlusssystems dient.

Im Falle eines konventionellen Freilaufgetriebes (bewegter Freilauf) ist die Haltescheibe zur Fixierung und Begrenzung eines Starterritzels vorgesehen. Dies ist erforderlich, da bei einem sogenannten "Durchdrehen" eines Verbrennungsmotors das zugehörige Starterritzel ansonsten axial in einen Zahnkranz hineingezogen beziehungsweise bewegt werden würde. Die Führungsscheibe begrenzt dagegen eine Axialbewegung von Freilaufrollen des Freilaufgetriebes und dient zusätzlich zur Führung von zugehörigen Rollenandrückfedern, so dass diese nicht mit einem Rollenbund des Starterritzels in Schleifkontakt treten können.

Bei Verwendung eines Freilaufgetriebes mit ortsfestem Freilauf wird mittels der Haltescheibe statt eines Starterritzels eine Antriebswelle axial fixiert. Die Antriebswelle ist insbesondere mittels eines Steilgewindes von einem separaten Starterritzel praktisch entkoppelt. Dabei treten bei einem Freilaufgetriebe mit ortsfestem Freilauf wesentlich geringere Axialkräfte auf als bei einem Freilaufgetriebe mit bewegtem Freilauf.

Zur Befestigung von vielen traditionellen Verschlusskappen kommen kraftschlüssige Verfahren wie zum Beispiel Reduzieren, Bördeln und ähnliches oder auch stoffschlüssige Verfahren wie beispielsweise Laserschweißen zum Einsatz. Derartige Befestigungsverfahren sind insbesondere bei Freilaufgetrieben mit bewegtem Freilauf aufgrund der auftretenden und verhältnismäßig hohen Axialkräfte üblich. Ferner ist bei Freilaufgetrieben mit bewegtem Freilauf die entsprechende Haltescheibe zur Axialfixierung eines Starterritzels üblicherweise gehärtet. Die Führungsscheibe ist aufgrund ihrer relativ komplizierten Formgebung (Oberflächenstrukturierung) in bekannter Weise aus einem geeigneten Kunststoff hergestellt.

Nachteilig an derartigen bekannten Verschlusssystemen ist, dass für jedes der Bauteile (Verschlusskappe, Haltescheibe, Führungsscheibe) separate Fügeprozesse ("pick and place") erforderlich sind. Darüber hinaus ist beispielsweise für das Reduzieren der Verschlusskappe ein zusätzlicher Arbeitsgang beziehungsweise eine zusätzliche Einrichtung (Reduzierpresse) erforderlich.

Aus der DE 100 07 620 A1 ist bereits ein Verschlusssystem der eingangs genannten Art bekannt, bei dem das Verschlusselement mit einem Haltering des Freilaufgetriebes verrastet ist. Zur Verrastung ist das Verschlusselement elastisch verformbar ausgebildet und mit einer Ringnut versehen, mit der ein flacher Ringflansch des Halterings in Rasteingriff gebracht wird. Wenn der Haltering verhältnismäßig leicht verformbar ist, besteht jedoch die Gefahr, dass er sich verformt und ggf. vom Verschlusselement löst, wenn von einem der Freilaufelemente eine axiale Kraft darauf ausgeübt wird. Wenn der Haltering andererseits verhältnismäßig schwer verformbar ist, muss eine relativ große Druckkraft aufgebracht werden, um den Haltering für den Rasteingriff des Ringflanschs in der Ringnut ausreichend stark aufzuweiten. Außerdem lassen sich in diesem Fall die beiden Teile mangels einer Eingriffsmöglichkeit im Bedarfsfall nur schwer wieder voneinander trennen und gestatten zudem keine Sichtkontrolle hinsichtlich einer korrekten Fixierung des Verschlusselements.

### Vorteile der Erfindung

Zur Beseitigung dieser Probleme wird erfindungsgemäß ein Verschlusssystem mit den Merkmalen des Anspruchs 1 vorgeschlagen. Das Verschlusssystem enthält ein multi-funktionales, einteiliges Verschlusselement zur Erfüllung von mindestens zwei der genannten Funktionen. Mittels eines derartigen Verschlusselements kann das Verschlusssystem in besonders montagegünstiger Weise an einem Freilaufgetriebe (mit bewegtem oder mit ortsfestem Freilauf) angebracht beziehungsweise befestigt werden, da die Anzahl der zu montierenden Bauelemente im Vergleich zu traditionellen Lösungen reduziert ist. Gegebenenfalls kann das Verschlusselement gleichzeitig als einteiliges Bauteil auch alle drei Funktionen (Führungsfunktion für eine Mehrzahl an Freilauf-Rollelementen, Haltefunktion für ein Antriebselement, Verschlussfunktion) erfüllen, so dass dann der Montageaufwand des Verschlusssystems auf ein Minimum reduziert ist.

Das Verschlusselement ist als Verschlusskappe mit integrierter Halte- und Führungseinheit ausgebildet. Das Verschlusselement erfüllt somit alle genannten, an das Verschlusssystem gestellte Funktionsanforderungen und ist gleichzeitig als einteiliges Bauteil ausgebildet, so dass eine verhältnismäßig einfache Montage des Verschlusssystems an einem Freilaufgetriebe möglich ist.

Weiter ist das Verschlusselement als mit dem Freilaufgetriebe trennbar befestigtes Rastelement ausgebildet. Mittels eines Rastelements ist eine schnelle und korrekte Fixierung des Verschlusselements am Freilaufgetriebe in Form einer Einrastverbindung möglich. Dabei lassen sich Rastelemente fertigungs-technisch verhältnismäßig einfach realisieren.

Zur Erfüllung der Verschlussfunktion ist mindestens ein und vorzugsweise eine Mehrzahl an jeweils eine Hinterschneidung aufweisenden Halteklipps am Verschlusselement vorgesehen. Zur Aufhebung der Verschlussfunktion beziehungsweise zum Trennen des Verschlusselements vom Freilaufgetriebe sind die Halteklipps vorzugsweise derart ausgebildet, dass sie von Außen mittels einer elastischen Verformung in eine Entriegelungsposition bewegbar sind.

Die Halteklipps sind im Abstand voneinander am Außenumfang des Verschlusselements angeordnet und mit Vorteil gleichmäßig verteilt. Hierdurch sind die Halteklipps von Außen gut zugänglich und erlauben eine verhältnismäßig einfache Kontrolle (Sichtkontrolle) hinsichtlich einer korrekten Fixierung des Verschlusselements am Freilaufgetriebe.

Vorteilhafterweise ist das Verschlusselement aus Kunststoff hergestellt. Ein derartiges Verschlusselement ist fertigungstechnisch relativ einfach beispielsweise mittels eines Spritzgießverfahrens herstellbar. Dabei kann mittels einer geeigneten Wahl des Kunststoffes ein Einsatz an einem Freilaufgetriebe mit ortsfestem Freilauf (vergleichsweise geringe am Verschlusselement angreifende Betriebs- oder Axialkräfte) oder mit bewegtem Freilauf (verhältnismäßig große am Verschlusselement angreifende Betriebs- oder Axialkräfte) vorgesehen sein.

Vorzugsweise ist das Verschlusselement ein spritzgegossenes Bauteil. Mittels des Spritzgießverfahrens lassen sich in verhältnismäßig einfacher Weise auch komplizierte Oberflächengeometrien beziehungsweise Oberflächenstrukturierungen an einem Kunststoffbauteil realisieren.

Entsprechend einer bevorzugten Ausführungsform weist das Verschlusselement an seiner dem Freilaufgetriebe zuzuwendenden Seite eine geometrische Strukturierung auf, die wenigstens teilweise komplementär zur Oberflächenstrukturierung der entsprechenden Freilaufgetriebeseite ausgebildet ist. Hierdurch kann das einteilige Verschlusselement konstruktiv nahezu einschränkungsfrei an die jeweilige Oberflächenstrukturierung der entsprechenden Freilaufgetriebeseite angepasst werden.

Zur Erfüllung der Führungsfunktion sind vorteilhafterweise mindestens ein und vorzugsweise eine Mehrzahl an Führungsvorsprüngen an der dem Freilaufgetriebe zuzuwendenden Seite des Verschlusselements angeordnet. Die Führungsvorsprünge dienen zum korrekten Führen von Freilaufrollelementen im Freilaufgetriebe.

Zur Erfüllung der Haltefunktion kann eine insbesondere ringförmige, geschlossene Haltefläche an der dem Freilaufgetriebe zuzuwendenden Seite des Verschlusselements vorgesehen sein. Die Haltefläche dient zur axialen Bewegungsbegrenzung eines Starterritzels (Freilaufgetriebe mit bewegtem Freilauf) beziehungsweise einer Antriebswelle (Freilaufgetriebe mit ortsfestem Freilauf).

Mit Vorteil weist das Verschlusselement an der dem Freilaufgetriebe zuzuwendenden Seite eine insbesondere angespritzte Dichtlippe auf. Somit ist ein derartiges einteiliges Verschlusselement auch zur Erfüllung einer weiteren, vierten Funktion, nämlich der Abdichtungsfunktion im Freilaufgetriebe, geeignet.

Vorteilhafterweise enthält das Verschlusselement eine in Bezug auf einen Antriebswellenabschnitt des Freilaufgetriebes durchmesserangepasste Durchgangsöffnung. Aufgrund der einteiligen Ausgestaltung des Verschlusselements kann auf eine hinsichtlich der jeweiligen Durchgangsöffnung fluchtende Anordnung von mehreren separaten Bauteilen (Verschlusskappe, Haltescheibe, Führungsscheibe), wie im Stand der Technik unter Einsatz von drei separaten Funktionselementen, verzichtet werden.

Ferner wird ein Freilaufgetriebe insbesondere eines Kraftfahrzeugs vorgeschlagen, das ein entsprechendes Verschlusssystem aufweist. Mittels eines derartigen Freilaufgetriebes lassen sich die in Bezug auf das Verschlusssystem obenerwähnten Vorteile erzielen.

Weitere vorteilhafte Ausgestaltungen der Erfindung ergeben sich aus der Beschreibung.

### Zeichnungen

Die Erfindung wird nachfolgend in einem Ausführungsbeispiel anhand einer zugehörigen Zeichnung näher erläutert. Es zeigen:
- Figur 1: eine schematische Unteransicht auf ein erfindungsgemäßes Verschlusselement;
- Figur 2: eine schematische Seitenansicht auf das Verschlusselement der Figur 1 entsprechend der Schnittlinie II-II;
- Figur 3: eine schematische, perspektivische Unteransicht auf das Verschlusselement der Figur 1 in verkleinertem Maßstab;
- Figur 4: eine schematische, perspektivische Draufsicht auf das Verschlusselement der Figur 3;
- Figur 5: eine schematische, perspektivische Seitenansicht auf ein Freilaufgetriebe mit bewegtem Freilauf und ohne Verschlusselement;
- Figur 6: eine schematische, perspektivische Seitenansicht auf ein Freilaufgetriebe mit ortsfestem Freilauf und ohne Verschlusselement, und
- Figur 7: eine schematische Seitenansicht eines längsgeschnittenen Freilaufgetriebes mit ortsfestem Freilauf und montiertem Verschlusselement.

### Beschreibung der Erfindung

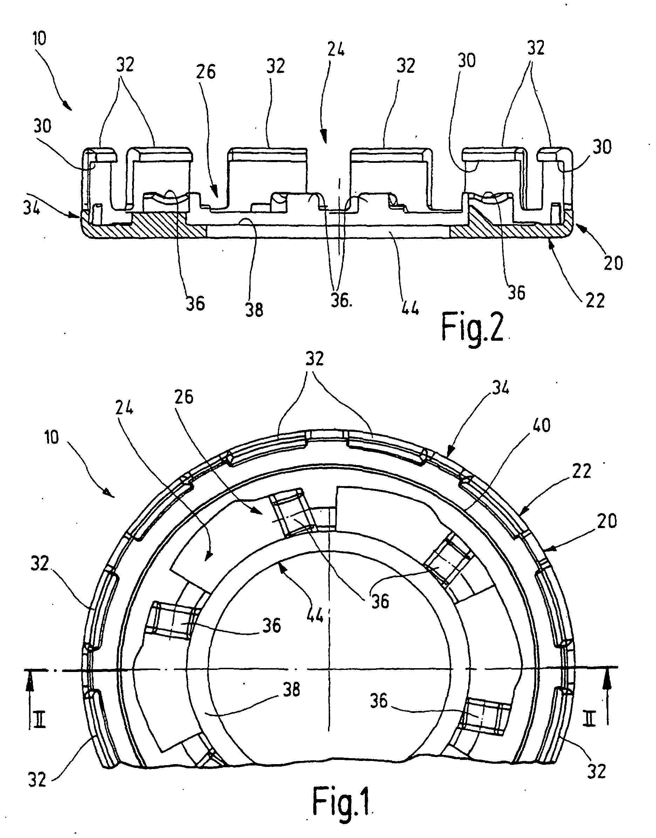

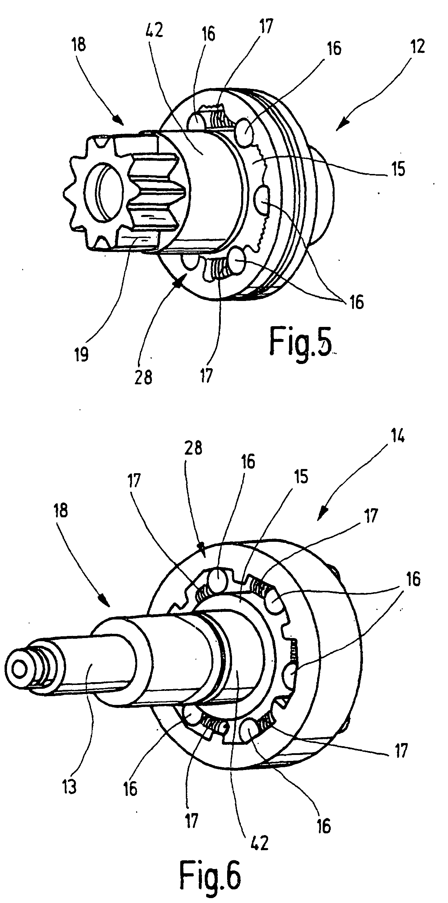

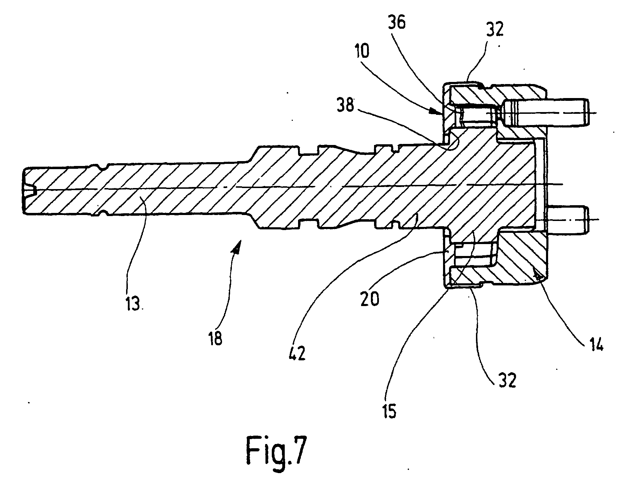

Die Figuren 1 bis 4 zeigen in unterschiedlichen, jeweils schematischen Ansichten ein allgemein 10 bezeichnetes Verschlusssystem für ein Freilaufgetriebe 12 mit bewegtem Freilauf (Figur 5) oder für ein Freilaufgetriebe 14 mit ortsfestem Freilauf (Figur 6), insbesondere eines Kraftfahrzeugs (nicht dargestellt). Das Verschlusssystem 10 erfüllt gleichzeitig mehrere Funktionen, nämlich eine Führungsfunktion für eine Mehrzahl an Freilauf-Rollelementen 16 und Freilauf-Druckfedern 17 (siehe auch Figuren 5 und 6), eine Haltefunktion für ein Antriebselement 18 und schließlich eine Verschlussfunktion für das Freilaufgetriebe 12 oder 14.

Dabei ist das Verschlusssystem 10 als ein einteiliges Verschlusselement 20 in Form einer multifunktionalen Verschlusskappe 22 ausgebildet, die eine integrierte Halte- und Führungseinheit enthält. Vorzugsweise ist das Verschlusselement 20 - beziehungsweise die Verschlusskappe 22- ein spritzgegossenes Kunststoffbauteil und bildet ein trennbar am Freilaufgetriebe 12 oder 14 befestigbares Rastelement. Hierzu weist das Verschlusselement 20 an seiner dem Freilaufgetriebe 12 oder 14 zuzuwendenden Seite 24 eine geometrische Strukturierung 26 auf, die teilweise komplementär zur Oberflächenstrukturierung 28 der entsprechenden, abzudeckenden Freilaufgetriebeseite ausgebildet ist.

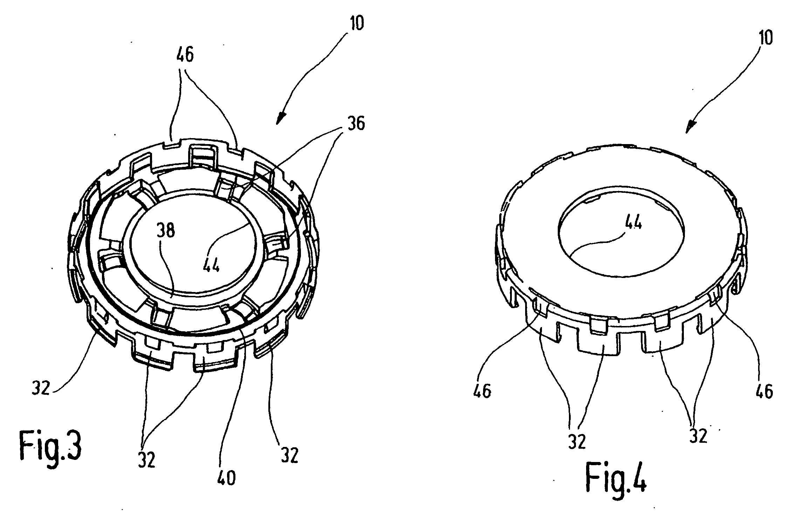

Zur Erfüllung der Verschlussfunktion sind am Verschlusselement 20 eine Mehrzahl an jeweils eine Hinterschneidung 30 aufweisenden Halteklipps 32 vorgesehen, wobei die Halteklipps 32 gleichmäßig verteilt und voneinander beabstandet am Außenumfang 34 des Verschlusselements 20 angeordnet sind. Dabei ist in einem jeweiligen Halteklippbereich am Verschlusselement 20 eine zugehörige Ausnehmung 46 (siehe Figuren 3, 4) vorgesehen zur Begünstigung einer erwünschten elastischen Verformbarkeit des Halteklipps 32 während einer Herstellung oder Aufhebung einer Einrastverbindung des Verschlusselements 20 am Freilaufgetriebe 12 oder 14. Ferner ist zur Erfüllung der Führungsfunktion eine Mehrzahl an Führungsvorsprüngen 36 an der dem Freilaufgetriebe 12 oder 14 zuzuwendenden Seite 24 des Verschlusselements 20 angeordnet. Zusätzlich ist zur Erfüllung der Haltefunktion eine ringförmige, geschlossene Haltefläche 38 an derselben Seite 24 des Verschlusselements 20 vorgesehen. Das Verschlusselement 20 ist an der genannten Seite 24 mit einer angespritzten Dichtlippe 40 versehen zur Abdichtung des Freilaufgetriebes 12 oder 14 gegen einen Fremdkörpereintritt oder einen Freilauf-Fettaustritt.

Dabei ist eine in Bezug auf einen Antriebswellenabschnitt 42 des Freilaufgetriebes 12 14 durchmesserangepasste Durchgangsöffnung 44 am Verschlusselement 20 ausgebildet.

Figur 7 zeigt einen schematischen Längsschnitt durch ein Freilaufgetriebe 14 mit ortsfestem Freilauf, wobei am Freilaufgetriebe 14 das Verschlusselement 20 befestigt ist zur gleichzeitigen Erfüllung die obengenannten Funktionen (Führungsfunktion, Haltefunktion, Verschlussfunktion). Zur Montage des Verschlusselements 20 ist dabei vorteilhafterweise nur ein einziger Fügevorgang ("pick and place") erforderlich. Das Verschlusselement 20 wird auf das Freilaufgetriebe 14 (oder 12) aufgeklippst, wobei keine zusätzlichen Einrichtungen notwendig sind, mittels welchen das Verschlusselement 20 auf das Freilaufgetriebe 14 (Mitnehmer) mit erhöhtem Kraftaufwand reduziert oder bordiert werden muss, wie es bei Lösungen gemäß des Stands der Technik erfolgt.

## Patentansprüche

1. Verschlusssystem für ein Freilaufgetriebe, insbesondere mit ortsfestem Freilauf, wobei das Verschlusssystem eine Führungsfunktion für eine Mehrzahl von Freilaufelementen, insbesondere Freilauf-Rollelementen und Freilauf-Druckfedern, eine Haltefunktion für ein Antriebselement und eine Verschlussfunktion aufweist und ein multi-funktionales, einteiliges Verschlusselement zur Erfüllung von mindestens zwei der genannten Funktionen enthält, und wobei das Verschlusselement als Verschlusskappe mit integrierter Halte- und Führungseinheit ausgebildet ist und als Rastelement trennbar am Freilaufgetriebe befestigbar ist, **dadurch gekennzeichnet, dass** die Verschlusskappe (22) zur Erfüllung der Verschlussfunktion eine Mehrzahl von Halteklipps (32) aufweist, die im Abstand voneinander an ihrem äußeren Umfang (34) angeordnet sind und jeweils eine Hinterschneidung (30) aufweisen.

2. Verschlusssystem nach Anspruch 1, **dadurch gekennzeichnet, dass** das Verschlusselement (20) aus Kunststoff hergestellt ist.

3. Verschlusssystem nach einem der vorhergehenden Ansprüche, **dadurch gekennzeichnet, dass** das Verschlusselement (20) ein spritzgegossenes Bauteil ist.

4. Verschlusssystem nach einem der vorhergehenden Ansprüche, **dadurch gekennzeichnet, dass** das Verschlusselement (20) an seiner dem Freilaufgetriebe (12,14) zuzuwendenden Seite (24) eine geometrische Strukturierung (26) aufweist, die wenigstens teilweise komplementär zur Oberflächenstrukturierung (28) der entsprechenden Freilaufgetriebeseite ausgebildet ist.

5. Verschlusssystem nach einem der vorhergehenden Ansprüche, **dadurch gekennzeichnet, dass** zur Erfüllung der Führungsfunktion mindestens ein und vorzugsweise eine Mehrzahl an Führungsvorsprüngen (36) an der dem Freilaufgetriebe (12,14) zuzuwendenden Seite (24) des Verschlusselements (20) angeordnet sind.

6. Verschlusssystem nach einem der vorhergehenden Ansprüche, **dadurch gekennzeichnet, dass** die Halteklipps (32) am äußeren Umfang (34) der Verschlusskappe (22) gleichmäßig verteilt sind.

7. Verschlusssystem nach einem der vorhergehenden Ansprüche, **dadurch gekennzeichnet, dass** zur Erfüllung der Haltefunktion eine insbesondere ringförmige, geschlossene Haltefläche (38) an der dem Freilaufgetriebe (12,14) zuzuwendenden Seite (24) des Verschlusselements (20) vorgesehen ist.

8. Verschlusssystem nach einem der vorhergehenden Ansprüche, **dadurch gekennzeichnet, dass** das Verschlusselement (20) an der dem Freilaufgetriebe (12,14) zuzuwendenden Seite (24) eine insbesondere angespritzte Dichtlippe (40) aufweist.

9. Verschlusssystem nach einem der vorhergehenden Ansprüche, **dadurch gekennzeichnet, dass** das Verschlusselement (20) eine in Bezug auf einen Antriebswellenabschnitt (42) des Freilaufgetriebes (12,14) durchmesserangepasste Durchgangsöffnung (44) enthält.

10. Freilaufgetriebe, insbesondere eines Kraftfahrzeugs, mit einem Verschlusssystem gemäß einem der vorhergehenden Ansprüche.

## Claims

1. Lock system for a free-wheel mechanism, in particular with a fixed free wheel, the lock system having a guide function for a plurality of free-wheel elements, in particular free-wheel roller elements and free-wheel compression springs, a holding function for a drive element and a locking function, and contains a multifunctional, single-component lock element for carrying out at least two of the aforesaid functions, and the lock element being embodied as a lock cap with integrated holding and guiding units and being attached to the free-wheel mechanism in a separable fashion as a latching element, **characterized in that** the lock cap (22) has a plurality of holding clips (32) in order to carry out the locking function, said holding clips (32) being arranged at a distance from one another along its external circumference (34), and each having an undercut (30).

2. Lock system according to Claim 1, **characterized in that** the lock element (20) is manufactured from plastic.

3. Lock system according to one of the preceding claims, **characterized in that** the lock element (20) is an injection-moulded component.

4. Lock system according to one of the preceding claims, **characterized in that** the lock element (20) has, on its side (24) which can be turned to the free-wheel mechanism (12, 14), a geometric structure (26) which is formed so as to be at least partially complementary to the surface structure (28) of the corresponding side of the free-wheel mechanism.

5. Lock system according to one of the preceding claims, **characterized in that**, in order to carry out the guide function, at least one guide projection (36), and preferably a plurality of guide projections (36), are arranged on the side (24) of the lock element (20) which can be turned to the free-wheel mechanism (12, 14).

6. Lock system according to one of the preceding claims, **characterized in that** the holding clips (32) are distributed uniformly along the outer circumference (34) of the lock cap (22).

7. Lock system according to one of the preceding claims, **characterized in that**, in order to carry out the holding function, an in particular annular, closed holding face (38) is provided on the side (24) of the lock element (20) which can be turned to the free-wheel mechanism (12, 14).

8. Lock system according to one of the preceding claims, **characterized in that** the lock element (20) has a sealing lip (40), which is in particular integrally injection-moulded on, on the side (24) which can be turned to the free-wheel mechanism (12, 14).

9. Lock system according to one of the preceding claims, **characterized in that** the lock element (20) contains a through-opening (44) whose diameter is matched to a drive shaft section (42) of the free-wheel mechanism (12, 14).

10. Free-wheel mechanism, in particular of a motor vehicle, having a lock system according to one of the preceding claims.

## Revendications

1. Système de fermeture pour un mécanisme à roue libre comprenant en particulier une roue libre fixe en position, le système de fermeture possédant une fonction de guidage pour une pluralité d'éléments de roue libre, en particulier d'éléments roulants de roue libre et de ressorts de compression de roue libre, une fonction de retenue pour un élément d'entraînement et une fonction de fermeture, et un élément de fermeture multifonctionnel, en une seule pièce, destiné à assurer au moins deux des fonctions précitées, et dans lequel l'élément de fermeture est constitué par un capuchon de fermeture possédant une unité de retenue et de guidage intégrée et peut être fixé au mécanisme à roue libre de façon séparable à la façon d'un élément d'encliquetage,
**caractérisé en ce que**
le capuchon de fermeture (22) présente, pour assurer la fonction de fermeture, une pluralité d'agrafes de retenue (32) écartées les unes des autres le long de sa périphérie extérieure (34) et présentant chacune une contre-dépouille (30).

2. Système de fermeture selon la revendication 1,
**caractérisé en ce que**
l'élément de fermeture (20) est fabriqué en matière plastique.

3. Système de fermeture selon une des revendications précédentes,
**caractérisé en ce que**
l'élément de fermeture (20) est une pièce moulée par injection.

4. Système de fermeture selon une des revendications précédentes,
**caractérisé en ce que**
l'élément de fermeture (20) présente, sur son côté (24) dirigé vers le mécanisme de roue libre (12, 14), une structure géométrique (26) qui est de configuration au moins partiellement complémentaire de la structure de surface (28) du côté correspondant du mécanisme à roue libre.

5. Système de fermeture selon une des revendications précédentes,
**caractérisé en ce que**
pour assurer la fonction de guidage, au moins une et de préférence plusieurs saillies de guidage (36) sont disposées sur le côté (24) de l'élément de fermeture (20) dirigé vers le mécanisme de roue libre (12, 24).

6. Système de fermeture selon une des revendications précédentes,
**caractérisé en ce que**
les agrafes de retenue (32) sont réparties uniformément sur la périphérie extérieure (34) du capuchon de fermeture (22).

7. Système de fermeture selon une des revendications précédentes,
**caractérisé en ce que**
pour assurer la fonction de retenue, une surface de retenue fermée (38), en particulier de forme annulaire, est prévue sur le côté (24) de l'élément de fermeture (20) dirigé vers le mécanisme de roue libre (12, 14).

8. Système de fermeture selon une des revendications précédentes,
**caractérisé en ce que**
l'élément de fermeture (20) présente une lèvre d'étanchéité (40), en particulier venue de moulage par injection, sur le côté (24) dirigé vers le mécanisme de fermeture (12, 14).

9. Système de fermeture selon une des revendications précédentes,
**caractérisé en ce que**
l'élément de fermeture (20) présente une ouverture de passage (44) adaptée en diamètre à un segment d'arbre d'entraînement (42) du mécanisme de roue libre (12, 14).

10. Mécanisme de roue libre, en particulier d'un véhicule automobile, comprenant un système de fermeture selon une des revendications précédentes.
